(19) Europäisches Patentamt
European Patent Office
Office européen des brevets

(11) Publication number: **0 280 247**
**A2**

# (12) EUROPEAN PATENT APPLICATION

(21) Application number: **88102596.9**

(51) Int. Cl.⁴: **C08G 61/08**

(22) Date of filing: **23.02.88**

(30) Priority: **27.02.87 JP 43037/87**
**23.03.87 JP 65799/87**
**11.11.87 JP 283188/87**
**24.11.87 JP 293981/87**
**24.11.87 JP 293982/87**

(43) Date of publication of application:
**31.08.88 Bulletin 88/35**

(84) Designated Contracting States:
**BE DE ES FR GB IT NL SE**

(71) Applicant: **TEIJIN LIMITED**
**11 Minami Honmachi 1-chome Higashi-ku**
**Osaka-shi Osaka-fu(JP)**

(72) Inventor: **Hara, Shigeyoshi**
**3-1-3, Yamatemachi**
**Iwakuni-shi Yamaguchi-ken(JP)**
Inventor: **Endo, Zen-ichiro c/o TEIJIN LIMITED, Products Dev.**
**Research Laboratories 2-1, Hinodecho**
**Iwakuni-shi Yamaguchi-ken(JP)**
Inventor: **Hemmi, Katsuichi c/o TEIJIN LIMITED, Products Dev.**
**Research Laboratories 2-1, Hinodecho**
**Iwakuni-shi Yamaguchi-ken(JP)**

(74) Representative: **Türk, Gille, Hrabal**
**Bruckner Strasse 20**
**D-4000 Düsseldorf 13(DE)**

## (54) Metathesis polymerization.

(57) A process for producing a cross-linked polymer by metathesis polymerizing monomers in the presence of at least one of carboxylic acid-halides, anhydrides, organic halogenated silicon compounds, halogenated-phosphorus and -sulfur compounds, a process for producing a molded article by the metathesis polymerization and a polymer and a molded article produced by those processes.

EP 0 280 247 A2

# Metathesis polymerization

## Field of the Invention

This invention relates to a process for producing a cross-linked polymer by metathesis polymerization, a process for producing a molded article, a cross-linked polymer and molded article produced by the processes and a polymerizable composition for producing the polymer and molded article.

## Background of the Invention

It is disclosed in U.S. Patent 4,400,340 and U.S. Patent 4,426,502 that ring-opening polymerization of a cycloolefin containing norbornene moiety, e.g. dicyclopentadiene (called "DCP" hereinafter), in the presence of a metathesis polymerization catalyst system comprising a catalyst component such as tungsten chloride and an activator component such as an alkylaluminum, produces a cross-linked polymer containing olefinic groups in the chain.

Said U.S. Patent 4,400,340 and U.S. Patent 4,426,502 disclose the production of a molded article by injecting a reactive liquid mixture comprising norbornene-type monomer such as DCP and a metathesis polymerization catalyst system into a mold in which said liquid mixture is metathesis polymerized in bulk (called "RIM process" hereinafter). RIM process is a low pressure one-step or one-shot injection of a liquid mixture into a closed mold where rapid polymerization occurs resulting in a molded article. Thus, there are easily produced large-sized molded articles from DCP and the like by RIM process. The molded articles have been taken notice from the industrial point of view since they have attractive physical properties as balanced in stiffness and impact resistance.

In the prior arts, however, the polymers and molded articles produced by the metathesis polymerization usually contain small amounts of unreacted cycloolefin monomers. Said unreacted cycloolefin monomers are characterized by a harsh, pungent, olefinic odor which is detectable at levels as low as 5 parts per billion (ppb) on air. Diffusion of the unreacted cycloolefin monomers from the polymers and molded article imparts a noticeably unpleasant odor. This is exacerbated when the polymers and molded articles are stored in sealed containers such as shipping cartons or they are trimmed or cut. Further, the remaining unreacted cycloolefin monomers will plasticize the polymers and molded articles and will provide them with a reduced glass transition temperature.

On the other hand, it is desired that both of the reactive monomer solutions containing the catalyst component and the activator component of the metathesis polymerization catalyst system respectively can be stored without reducing polymerizability until they are actually used in the polymerization operation. The polymerizability of the reactive monomer solutions, however, will reduce with the elapsed time, and the amount of the remaining unreacted monomers in the polymers and molded articles will increase with the increase of the storing time of the reactive monomer solutions. The excess use of the metathesis polymerization catalyst system will bring about an increased process cost and a reduced durability of the desired polymers, but will not reduce the amount of the remaining unreacted monomers in the polymers and molded articles.

U.S. Patent 4,481,344 discloses reducing the amount of the remaining unreacted monomers in the polymers by adding to reactant streams a halogen containing hydrocarbyl additive having at least one trihalogen substituted carbon atom or having at least one activated halogen atom. But most of the compounds belonging to the above definition and having effects to reduce the residual monomers are difficult to use, that is, highly volatile and of irritant odor. Therefore, it is still desired to reduce the unreacted residual monomers in the metathesis polymers by compounds which are convenient to use, that is, inexpensively available, non-toxic and not highly volatile.

Now, we have found that carboxylic acid halides and anhydrides, and particular halogenated-silicon, phosphorus and sulfur compounds, all of which are non-toxic, cheap and not highly volatile, can reduce the amount of the monomers in the metathesis polymerized polymers.

Therefore, it is an object of the present invention to provide a process for producing a cross-linked metathesis polymerized polymer in which the amount of the unreacted residual monomers is dramatically reduced.

A further object is to provide a process for producing a molded article comprising the polymer. A still further object is to provide a polymer and molded article produced by the processes.

Other object is to provide a multi-part metathesis polymerizable composition used for producing the polymer and molded article.

## Summary of the Invention

The present invention relates to a process for producing a cross-linked polymer, which comprises polymerizing at least one of metathesis polymerizable monomers in the presence of a metathesis polymerization catalyst system and at least one of (a) carboxylic acid halides, (b) carboxylic acid anhydrides, (c) organic halogenated silicon compounds having at least one halogen-silicon bond, (d) halogenated phosphorus compounds having at least one halogen-phosphorus bond and (e) halogenated sulfur compounds having at least one halogen-sulfur bond.

Further, the present invention relates to a process for producing a molded article by introducing a reactive liquid mixture into a mold in which said liquid mixture is metathesis polymerized in bulk to produce the molded article, said liquid mixture comprising at least one of metathesis polymerizable monomers, a metathesis polymerization catalyst system and at least one of said compounds (a), (b), (c), (d) and (e).

In addition, the present invention relates to a multi-part polymerizable composition which comprises at lease one of metathesis polymerizable monomers, a metathesis polymerization catalyst system and at least one of said compounds (a), (b), (c), (d) and (e), and said metathesis catalyst system comprising a catalyst and an activator which are not present in the same parts.

The present invention further relates to a polymer and molded article produced by the processes.

## Detailed Description of the Invention

In the present invention, as the carboxylic acid halides (a), there can be used halides of any carboxylic acids such as aliphatic-, alicyclic-, aromatic-and heterocyclic-carboxylic acids. Among them, halides of medium-chain-and long-chain-aliphatic carboxylic acids and halides of aromatic carboxylic acids are preferable, and halides of the aromatic carboxylic acids are more preferable. Among halides, chlorides are preferable. Examples of preferred aliphatic carboxylic acid halides are sebacic chloride, azelaic chloride, cyclohexane dicarboxylic chloride and the like.

Examples of preferred aromatic carboxylic acids halides are isophthalic dichloride, phthalic dichloride, terephthalic dichloride, trimellitic trichloride, pyromellitic tetrachloride, trimesic trichloride, 3,3′-diphenylmethane dicarboxylic dichloride and the like. Among them, phthalic dichloride, isophthalic dichloride and terephthalic dichloride are more preferable since they are inexpensively available.

Generally, the carboxylic acid halides (a) are used in the amount of about 0.3-4 equivalent, preferably 0.5-2.5 equivalent, of the carboxylic acids halides to 1 equivalent atom of transition metal in the catalyst component of the metathesis polymerization catalyst system.

As the carboxylic acid anhydrides (b), there can be used both of anhydrides formed by dehydrating one kind of carboxylic acid and anhydrides formed by dehydrating a mixture of plural kinds of carboxylic acids. There can be used, further, mixed anhydrides, that is, anhydrides formed by hydration between at least one of carboxylic acids and other acids having at least one hydroxyl group, such as sulfonic acids. Anhydrides of any of carboxylic acids, such as aliphatic-, alicyclic-, aromatic-and heterocyclic-carboxylic acids, can be used. It is preferred that the carboxylic acids anhydrides have a rather high boiling point and are easily soluble in the reactive monomer solutions. Both of chain-and cyclic-carboxylic acids anhydrides can be used.

Examples of the aromatic carboxylic acids anhydrides include benzoic anhydride, p-toluic anhydride, anhydride between benzoic acid and acetic acid, anhydride between benzoic acid and p-toluenesulfonic acid, cyclic anhydride of o-sulfo benzoic acid. As other examples of the aromatic carboxylic acids anhydrides, there may be used cyclic anhydrides such as phthalic anhydride, tetrabromophthalic acid anhydride, pyromellitic dianhydride, bistrimellitic trianhydride having the chemical structure

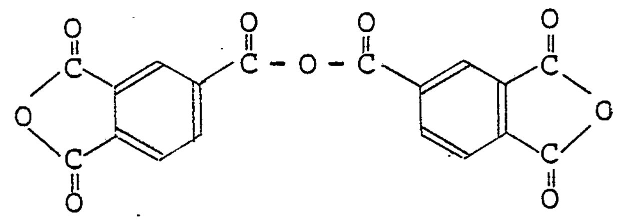

3,3',4,4'-benzophenone tetra carboxylic acid anhydride and the like. Howeveer, some of such cyclic anhydrides are sparingly soluble in reactive monomer solutions, and thus the strict reaction conditions are required when they are practically used. Further, there can be used carboxylic acid anhydrides having carboxylchloride group which can also reduce the amount of the unreacted remaining monomers, e.g. 4-chloroformyl phthalic anhydride.

Examples of aliphatic-and alicyclic-carboxylic acid anhydrides include tetrahydrophthalic anhydride, succinic anhydride, maleic anhydride, propionic anhydride, trifluoroacetic anhydride, cyclohexanecarboxylic anhydride, anhydride between methanesulfonic acid and acetic acid, and the like.

Among the above examples, linear anhydrides of aromatic carboxylic acids such as benzoic anhydride are preferable from the view points that they can more effectively reduce the amount of the unreacted monomers and they are readily available at low cost.

Generally, the carboxylic acid anhydrides (b) are used in the amount of about 0.3-4 equivalent, preferably 0.5-2.5, of carboxylic acid anhydrides per 1 equivalent atom of transition metal in the catalyst component of the metathesis polymerization catalyst system.

In the present invention, as the organic halogenated silicon compounds (c), any of organic halogenated silicon compounds having at least one halogen-silicon bond can be used. Halogen atom of the silicon compounds (c) is preferably chlorine and bromine, more preferably chlorine. The organic groups of the silicon compounds (c) are preferably alkyl-and aryl-groups which bond directly to silicon atom, among which, aryl groups, especially phenyl-and phenylene-groups, are more preferable from the view point of easy availability.

Preferred organo silicon compounds (c) include organic halogenated silanes and organic halogenated siloxanes. Said silanes and siloxanes may also contain alkoxy groups and/or aryloxy groups. Both of linear and cyclic silicon compounds can be used.

Examples of the organic halogenated silicon compounds (c) include phenyltrichlorosilane, diphenyldichlorosilane, triphenylchlorosilane, p-phenylene-bis-(trichlorosilane), di-p-phenyldichlorosilane, trimethylchlorosilane, dimethyldichlorosilane, methyltrichlorosilane, halogen-containing siloxane produced by partial hydrolysis of those silanes. Among them, phenyl trichlorosilane and dichlorodiphenylsilane are preferred, since they are more advantageous in the reduction of the amount of the unreacted monomers and more easily available.

The organic halogenated silicon compounds (c) are generally used in the amount of about 0.5-4 equivalent, preferably 0.9-2.5 equivalent, of halogenated silicon atom per 1 equivalent atom of transition metal in the catalyst component of the metathesis polymerization catalyst system.

In the present invention, as the halogenated phosphorus compounds (d), there can be used any of inorganic and organic halogenated phosphorus compounds containing at least one halogen-phosphorus bond. The halogen atom of the halogenated phosphorus compounds (d) are preferably chlorine and bromine, more preferably chlorine, from the view point of economy. Both of tri-valent and penta-valent phosphorus compounds can be used.

Among them are included halogenated phosphorus compounds having the chemical formula:

$P(R)a(X)b$ or $PO(R)a'(X)b'$

wherein R is an organic group, X is a halogen atom, a is an integer of 0-3, b is an integer of 1-5, $a+b=3$ or 5, a' is an integer of 0-2, b' is an integer of 1-3, and $a'+b'=3$, halogen-containing esters of the above compounds produced by partially esterifying the above compounds with alcohols or phenols, and partially-hydrolyzed and condensed halogen-containing products of the above compounds, which may be linear or cyclic.

It is preferred that the halogenated phosphorus compounds (d) have a boiling point of at least 60°C, more preferably at least 100°C, and are readily soluble in the reactive monomer solutions. From these view points, phosphorus pentachloride and phosphorus pentabromide are not preferable, since they are highly reactive solid and are sparingly soluble in the reactive monomer solutions.

Preferred examples of the halogenated phosphorus compounds (d) include phosphorus oxychloride, phosphorus oxybromide, phenyl dichlorophosphate, phenyl phosphonic dichloride, phosphorus trichloride,

phosphorus tribromide, phenyl dichlorophosphine, phenyl dibromophosphine and the like. Among them, phosphorus oxychloride, phenyl dichlorophosphate, phenyl dichlorophosphine, phenyl phosphonic dichloride and the like are more preferable from the view points that they can drastically reduce the amount of the unreacted monomers and they are easily available.

The halogenated phosphorus compounds (d) are generally used in the amount of about 0.3-4 equivalent, preferably 0.5-2.5 equivalent, of halogenated phosphorus atom per 1 equivalent atom of transition metal in the catalyst component of the metathesis polymerization catalyst system.

In the present invention, as the halogenated sulfur compounds (e), there can be used any of inorganic and organic halogenated compounds having at least one halogen-sulfur bond. Halogen atom of the halogenated sulfur compounds(e) are preferably chlorine and bromine, more preferably chlorine, from the view points of the more effective reduction of the amount of the residual monomers and easy availability.

It is preferred that the halogenated sulfur compounds have a boiling point of at least 60°C, more preferably at least 100°C, and are readily soluble in the reactive monomer solutions. Among them are included halides of sulfur-containing oxyacids such as sulfuric acid, sulfurous acid, sulfonic acid and the like; sulfur halides; halides of mercaptans; and the like.

Preferred examples include benzene sulfonyl chloride, p-toluenesulfonyl chloride, sulfurylchloride, thionyl chloride, s-chlorothiophenol, sulfur dichloride, chlorinated-disulfide. Among them, benzene sulfonyl chloride, p-toluenesulfonyl chloride are more preferable from the view points of easy availability and easy handling.

The halogenated sulfur compounds (e) are generally used in the amount of 0.3-4 equivalent, preferably 0.5-2.5 equivalent, of halogenated sulfur atom per 1 equivalent atom of transition metal in the catalyst component of the metathesis polymerization catalyst system.

As mentioned above, it is preferred that the compounds (a), (b), (c), (d) and (e) have a boiling point of, generally at least 60°C, preferably at least 100°C, and are easily soluble in the reactive monomer solutions.

It is preferred, further, that the compounds (a), (b), (c), (d) and (e) do not contain impurities which prevent metathesis polymerization and which are harmful.

The compounds (a), (b), (c), (d) and (e) may be introduced into at least one of the reactive monomer solutions containing the catalyst component and the activator component respectively in advance of the metathesis polymerization, or they may be introduced into at least one of said solutions immediately before the metathesis polymerization.

However, those compounds (a), (b), (c), (d) and (e) are preferably introduced into the reactive monomer solution containing the catalyst component, since they may be reactive with the activator component such as alkylalminum rather than the catalyst component and often change the activity of the activator component.

When the compounds (a), (b), (c), (d) and (e) are added to the reactive monomer solution in advance of the polymerization, the activity of the catalyst component is maintained during storage. When the compounds (a), (b), (c), (d) and (e) are added immediately before the polymerization, the activity of the monomer solution, polymerizability of which has reduced after a lapse of time, is increased by their addition.

In the present invention, the amount of the unreacted monomers in the polymers can be dramatically reduced at low cost by the addition of the compounds (a), (b), (c), (d) and (e) to the reactive monomer solutions, and it is unnecessary to use an additional expensive catalyst system. When at least one of the compounds (a), (b), (c), (d) and (e) are added, for example, in the amount of 0.5-2 equivalent per 1 equivalent of metal atom of the catalyst component, the amount of the unreacted monomers in the polymers can be reduced to one half or less in contrast to the case in which said compounds are not added.

In the present invention, therefore, there can be produced metathesis polymerized polymers and molded articles which are free from a harsh, pungent, olefinic odor and are free from plasticizing by the residual monomers.

On the other hand, it has become evident that the compounds (a), (b), (c), (d) and (e) have no substantial influence on the polymerization time.

From the above, it is presumed that those compounds (a), (b), (c), (d) and (e) will not participate in the initiation of the metathesis polymerization but will participate in the final stage of the metathesis polymerization. They may reactivate the catalyst at the last stage of polymerization or may initiate other reaction consuming the residual monomer.

In the present invention, the metathesis polymeizable monomers are preferably cycloalkenes having 1 or 2 of metathesis polymerizable cycloalkene moieties, especially at least one of norbornene moieties. Examples of them include dicyclopentdiene (DCP), tricyclopentadiene,

cyclopentadienemethylcyclopentadiene-codimer, 5-ethylidenenorbornene, 5-vinylnorbornene. 5-phenylnorbornene, norbornene. 5-cyclohexenylnorbornene. 1,4-methano-1,4,4a,5,6,7,8,8a-octahydronaphthalene, 1,4,5,8-dimethano-1,4,4a.5,6,7,8,8a-octahydronaphthalene, 6-ethylidene-1,4,5,8-dimethano-1,4.4a.5,7,8,8a-heptahydronaphthalene, 1,4,5,8-dimethano-1,4,4a,5,8,8a-hexahydronaphthalene-ethylene-bis(5-norbornene), tri-cyclo[8,2,l,0]trideca-5,11-diene, norbornadiene and the like.

They can be used alone or in the form of a mixture of some of them. Dicyclopentadiene or a mixture of dicyclopentadiene with at least one of other monomers is preferable.

In the present invention, there may also be used other metathesis polymerizable cyclic compounds having at least one of hetero atoms such as oxygen, nitrogen and the like together with metathesis polymerizable cycloalkene moiety, preferably norbornene moiety.

The hetero atom forms a polar group in the structure of said cyclic compounds, and those cyclic compounds having the polar group often can moderate the metathesis polymerization reaction.

Preferred examples of the polar groups include ether groups, carboxylic ester groups, cyano group, N-substituted imido groups and the like.

Examples of other cyclic compounds having the polar groups include [(5-norbornenyl)-methyl]phenyl ether, bis[(5-norbornenyl)-methyl]ether, 5-methoxycarbonylnorbornene, 5-methoxycarbonyl-5-methylnorbornene, 5-[(2-ethylhexyloxy)-carbonyl]norbornene, ethylene-bis(5-norbornenecarboxylate), 5-cyanonorbornene, 6-cyano-1,4,5,8-dimethano-1,4,4a,5,6,7,8,8a-octahydronaphthalene, N-butylnadic acid imide, 5-(4pyridyl)-norbornene and the like.

These cyclic compounds having polar groups are generally used with DCP and the like. It is also preferable that these other cyclic compounds have less impurities which inhibit the metathesis polymerization.

In general, as well known, the metathesis polymerization catalyst system is composed of two components, i.e. a main catalyst component and an activator component. In the practice of bulk polymerization in the presence of the metathesis polymerization catalyst system, the activator component is first added to the monomer mixture, and then the principal catalyst component is added to the mixture to initiate polymerization, and finally the mixture is molded before solidified to produce a cross-linked molded articles. Alternatively, the principal catalyst component and the activator component can be added to the monomer mixture in the reversed order. Further, the principal catalyst component and the activator component are simultaneously added to the monomer mixture immediately before pouring the mixture into the mold, and molded articles are prepared in the same manner as the above.

The metathesis polymerization reaction, however, is an exothermal reaction and proceeds very rapidly. Under such situation, the polymerization often occurs before the mixture poured into a mold, and it makes the pouring of the mixture into the mold difficult and makes the production of large sized molded articles difficult.

Accordingly, it is desirable to use a method in which the original reactive monomer solutions to be poured into the mold are separated into multi-part reactive solutions, that is, the catalyst and the activator of the metathesis polymerization catalyst system are added to individual monomer liquids to form multi-part reactive solutions, and then the multi-part reactive solutions are mixed rapidly by means of impinging-mixing (the RIM process) or by using a static mixer, and finally the mixture is immediately poured into a mold wherein it is polymerized and molded.

In this method, the multi-part reactive solutions do not need to have the same composition of monomers each other. The composition of the monomers may be changed freely.

As mentioned already the compounds (a), (b), (c), (d) (e) are added into at least one of the multi-part of the reactive solutions, preferably into the part containing the catalyst component rather than into the part containing the activator component, and the above molding processes are carried out to produce a molded article containing less amount of the residual monomers.

As the catalyst component of the metathesis polymerization catalyst system are used salts such as halides of tungsten, molybdenum, rhenium or tantalium, preferably. tungsten and molybdenum. Particularly preferable are the tungsten compounds. Among tungsten compounds are preferred tungsten halides, tungsten oxyhalides and the like. More particularly, tungsten hexachloride and tungsten oxychloride are preferred. Organo ammonium tungstate may also be used. However, such tungsten halide compounds undesirably often initiate cationic polymerization immediately when added directly to the mixture of monomers. It is, therefore, preferable that they are previously suspended in an inert solvent such as, for example, benzene, toluene or chlorobenzene and solubilized by the addition of an alcoholic compound or a phenolic compound.

A chelating agent or a Lewis base is preferably added to the solution containing the tungsten compound in order to prevent undesirable polymerization. Those additives may include acetylacetone, acetoacetic

acid, alkyl esters, tetrahydrofuran, benzonitrile and the like. About 1-5 moles of a chelating agent or the Lewis base is preferably used per one mole of the tungsten compound. However, when a polar monomer moderating the metathesis polymerization is used with DCP and the like, the chelating agent or the Lewis base may be omitted. Under such situations, the reactive solution containing the monomers and the catalyst component of the metathesis polymerization catalyst system is kept stable sufficiently for practical use.

The activator components of the metathesis polymerization catalyst system include organic metal compounds such as alkylated products of metals of Group I - Group III in the Periodic Table, preferably, tetraalkyl tins, alkylaluminum compounds and alkylaluminum halide compounds including diethylaluminum chloride, ethylaluminum dichloride, trioctylaluminum, dioctylaluminum iodide, tetrabutyltin and the like. The activator component is dissolved in a mixture of monomers to form the other reactive solution.

According to the present invention, in principle, the molded articles are produced by mixing said two reactive solutions as already described above. The polymerization reaction, however, starts so rapidly when the above-mentioned composition is used, and so the undesirable initiation of polymerization often accompanied by partial gellling occurs before completion of filling of the mixed solution into the mold. In order to overcome the problem, it is preferable to use a polymerization moderating agent.

As such moderators are generally used Lewis bases, particularly, ethers, esters, nitriles and the like.

Examples of the moderators include ethylbenzoate, butyl ether, diglyme, diethyleneglycoldibutylether, benzonitrile and the like. Such moderators are generally added to the reactive solution containing the activator component.

In this case, when a polar monomer moderating the metathesis polymerization is used with DCP and the like in the reactive solution containing the activator component, the Lewis base may also be omitted.

When a tungsten compound is used as the catalyst component, the ratio of the tungsten compound to the above-mentioned monomers is about 1000:1 - about 15000:1, and preferably about 2000:1 on molar base. When an alkylaluminum compound is used as the activator component, the ratio of the aluminum compound to the above-mentioned monomers is about 100:1 - about 2000:1 and preferably around a ratio of about 200:1 - about 500:1 on molar base. The amount of the masking agent or the moderator may be adjusted by experiments depending upon the amount of the catalyst system.

A variety of additives may be used practically in the present invention to improve or to maintain characteristics of the molded articles. The additives include fillers, reinforcing agents, pigments, antioxidants, light stabilizers, macromolecular modifiers, flame retardants and the like. These additives must be added to the starting solutions, since they cannot be added after the solutions are polymerized to the solid molded polymer.

They may be added to either one or both of multi-part reactive solutions. The additives must be ones being substantially unreactive with the highly reactive catalyst and activator component of the metathesis polymerization catalyst system and the compounds (a), (b), (c), (d) and (e) in the solutions to avoid troubles as well as not to inhibit polymerization.

If a reaction between the additive and the catalyst system and/or the compounds (a), (b), (c), (d) and (e) is unavoidable but does not proceed so rapidly, the additives can be mixed with the monomers to prepare a third solution, and the third solution is mixed with the first and/or second solutions of the multi-part solutions immediately before pouring the mixture into a mold. When the additive is a solid filler, a reactive solution containing the filler suspended in it can be used. Instead, the mold can be filled with the filler prior to pouring the reactive solutions into the mold.

The reinforcing agents and fillers can improve flexural modulus of the polymer. They include glass fibers, mica, carbon black, wollastonite and the like. The fillers whose surfaces are treated with silan coupling agent may preferably be used.

The molded articles of the invention may preferably contain an antioxidant. Preferably, a phenol-or amineantioxidant is added previously to the polymerizable solution. Examples of the antioxidants include 2,6-t-butyl-p-cresol, N,N'-diphenyl-p-phenylenediamine, tetrakis[methylene(3,5-di-t-butyl-4-hydroxycinnamate)]methane, methylene-4,4'-bis(3,5-di-t-butylphenol) and the like.

The polymer molded articles of the invention may also contain other polymers, which are added to the monomer solution. Among polymers, elastomers are more preferable, since they increase the impact strength of the molded articles and they effectively controll the viscosity of the solution. Examples of the elastomers include styrene-butadiene rubber, polybutadiene, styrene-butadiene-styrene triblock rubber, styrene-isoprene-styrene triblock rubber, polyisoprene, butyl rubber, ethylene-propylene rubber, ethylene-propylene-diene terpolymer, nitril rubber and the like.

As described above, the polymer molded articles of the invention are preferably prepared by simultaneous molding with polymerizing, i.e. by RIM process or pre-mix process including RTM and RI process. In RIM process, two-part monomer solutions containing the catalyst and the activator respectively are rapidly

mixed in the impingement mixing head of a RIM instrument and the mixture is poured into a mold wherein it polymerises and is molded.

In pre-mix process, two-part monomer solutions containing the catalyst component and the activator component respectively are previously mixed to prepare a pre-mixture and then the pre-mixture is introduced into a mold. In the RIM and RTM process, fillers such as glass fibers may be placed in the mold prior to pouring the mixed reactive solutions, or may be added in at least one of the reactive solutions or premixtures.

In both of RIM process and pre-mix process, the mixture can be intoduced into the mold under relatively low pressure so that an inexpensive mold is usable. The temperature inside the mold increases rapidly by heat of the polymerization reaction so that the polymerization reaction is completed in a short time. The molded article of the invention can be removed easily from the mold without a releasing agent unlike the polyurethane-RIM process.

The surface of the molded articles of the invention has polarity probably by the oxidized layer formed on the surface so that conventional coatings such as epoxy, polyurethane and the like adhere to the surface well.

The present invention provides a variety of molded articles which include large sized molded articles such as parts of various vehicles including automobiles, motorbikes, motorboats, snowmobiles, etc. and housing of electric and electronic instruments and the like.

The invention described herein is illustrated by the following examples. These examples do not limit the invention.

Examples 1-10 and Comparative Examples 1-2

Commercially available dicyclopentadiene (DCP) was purified by distillation under nitrogen and reduced pressure to produce purified DCP with a freezing point of 33.4°C. The purity was determined by gas chromatography to be not less than 99%.

There were used phthalic dichloride, isophthalic dichloride and terephthalic dichloride, all of which have the purity above 99% determined by gas chromatography.

[Preparation of solutions containing the catalyst]

20 g Of tungsten hexachloride was added to 70 ml of anhydrous toluene under nitrogen and then a solution consisting of 21 g of nonylphenol and 16 ml of toluene was added to prepare a catalyst solution containing 0.5 M tungsten in terms of the metal content. The solution was purged with nitrogen overnight to remove hydrogen chloride gas formed by the reaction of tungsten hexachloride with nonylphenol. The resulting solution was used as a catalyst solution for polymerization.

With 10 ml of the above catalyst solution were mixed 1.0 ml of acetylacetone and 500 ml of one of the monomer solutions containing DCP or DCP/ethylidenenorbornene mixture with or without one of phthalic dichloride, isophthalic dichloride and terephthalic dichloride in the amounts shown in Table 1 below to prepare the first reactive solution (Solution A) containing 0.001 M tungsten in terms of the metal content.

[Preparation of solutions containing the activator]

Mixed activator containing trioctylaluminum and dioctylalminum iodide and diglyme in the molar ratio of 85:15:100 was mixed with 500 ml of the same monomer solution as used in the preparation of Solution A to prepare the second reactive solution (Solution B) containing 0.003 M aluminum in terms of the metal content.

Each of 10 ml of Solution A and 10 ml of Solution B was kept at 30°C and then was introduced into two syringes purged with nitrogen respectively. Solution A and Solution B in syringes were injected at constant rate into a mold of a micro-RIM molding instrument in which nozzle Solutions A and B were mixed under impingement. There was produced each of brown tough plates. The plate was cut to each of 1 g test pieces. Each of the 1 g test pieces was immersed in toluene to extract residual monomers. The amount of the residual monomers was determined by gas chromatography and the results are shown in Table 1 below.

In Example 10, isophthalic dichloride was added to Solution A having less polymerizability due to

extended storage. In comparative Example 2, the same solution A as Examples 10 was used. The polymerizability of Solution A was determined by measuring the period between the first mixing of Solution A and Solution B, for example at 30°C, and the time wherein the temperature of the mixture reaches a given temperature, e.g. 100°C, by exotherm of the metathesis polymerization.

Table 1

| | Example No. | | | | | | | | | | Comparative Example No. | |
|---|---|---|---|---|---|---|---|---|---|---|---|---|
| | 1 | 2 | 3 | 4 | 5 | 6 | 7 | 8 | 9 | 10 | 1 | 2 |
| Kind of carboxylic acid halide | A | A | A | B | B | B | C | A | D | A | - | - |
| Equivalent of carboxylic acid halide per 1 equivalent atom of tungsten | 2.0 | 1.0 | 0.5 | 2.0 | 1.0 | 0.5 | 1.0 | 1.0 | 1.0 | 1.0 | 0 | 0 |
| Monomer composition of Solutions A and B (mole %) | | | | | | | | | | | | |
| DCP | 100 | 100 | 100 | 100 | 100 | 100 | 95 | 95 | 100 | 100 | 100 | 100 |
| Other comonomers | 0 | 0 | 0 | 0 | 0 | 0 | EN[2) ] 5 | EN 5 | 0 | 0 | 0 | 0 |
| Amount of residual monomers[1)] (wt.%) | 0.63 | 0.59 | 1.17 | 0.64 | 0.55 | 1.23 | 0.30 | 0.25 | 0.70 | 0.67 | 2.55 | 6.20 |

(Note) A: Isophthalic dichloride B: Phthalic dichloride
C: Terephthalic dichloride D: Sebacic dichloride
1): Based on weight of test piece
2): Ethylidenenorbornene

Table I shows that the molded articles produced by adding carboxylic acid halide contain less residual monomers than the molded articles produced in the absence of carboxylic acid halide.

Example 11 and Comparative Example 3

Each of 50 ml of the same Solution A as Example 2 containing isophthalic dichloride and 6% of styrene-butadiene rubber (Stereon 720, available from Fire-Stone Co.) and 50 ml of the same Solution B as Example 2 also containing 6% of styrene-butadiene rubber (Stereon 720) was injected at constant rate into a mold of a RIM molding instrument in which nozzle Solutions A and B were mixed under impingement. There was produced each of plates of 3 mm thickness (Example 11). The amount of the unreacted monomers was determined in the same manner as Examples 1-10. The result is shown in Table 2 below.

There were produced plates according to the same procedure as Example 11 but using no isophthalic dichloride (Comparative Example 3). The amount of the residual monomers was determined in the same manner as Examples 1-10. The glass transition temperature and notched Izod strength of the molded articles was also determined.

The results are shown in Table 2 below.

Table 2

| Example No. | Example 11 | Compar. Example 3 |
|---|---|---|
| Amount of residual monomers (wt.%) | 2.2 | 4.5 |
| Tg 3) (°C) | 133 | 126 |
| Notched Izod strength | 42 | 43 |

(Note) 3): Measured by DMA method

Table 2 shows that the addition of isophthalic dichloride decreases dramatically the amount of unreacted monomers in the molded articles and provides the molded article with increased glass transition temperature (Tg) though both of the molded articles have the similar notched Izod strength.

Examples 12-20 and Comparative Examples 4-5

DCP having the same purity as Examples 1-10 was used.

In these Examples 12-20, there was used commercially available benzoic anhydride, a sulfo benzoic anhydride, phthalic anhydride or trifluoroacetic anhydride, each of which has a purity of above 99% determined by gas chromatography.

With 10 ml of the same catalyst solution as used in Examples 1-10 were mixed 1.0 ml acetylacetone and 500 ml of one of the monomer solutions containing DCP or Dcp/ethylidenenorbornene with or without one of benzoic anhydride, sulfo benzoic anhydride, phthalic anhydride and trifluoroacetic anhydride in the amounts shown in Table 3 below to prepare the first reactive solution (Solution A) containing 0.001 M tungsten in terms of the metal content.

The activator-containing solution (Solution B) was prepared in the same manner as in Examples 1-10 but using the monomer solutions shown in Table 3 below.

Tough, brown plates were prepared by using the above Solutions A and B according to the same procedures as Examples 1-10.

In Example 20 and Comparative Example 5, there was used Solution A having less polymerizability as used in Example 10 and Comparative Example 2.

The amount of the residual monomers was determined in the same manner as Examples 1-10.

The results are shown in Table 3 below.

Table 3

| | Example No. | | | | | | | | | Comparative Example No. | |
|---|---|---|---|---|---|---|---|---|---|---|---|
| | 12 | 13 | 14 | 15 | 16 | 17 | 18 | 19 | 20 | 4 | 5 |
| Kind of carboxylic acid anhydride | A | A | A | B | B | B | B | C | A | - | - |
| Equivalent of carboxylic acid anhydride per 1 equivalent atom of tungsten | 2.0 | 1.0 | 0.5 | 2.0 | 2.0 | 2.0 | 1.0 | 0.5 | 1.0 | 0 | 0 |
| Monomer composition of Solutions A and B (mole %) | | | | | | | | | | | |
| DCP | 100 | 100 | 100 | 100 | 95 | 100 | 100 | 100 | 100 | 100 | 100 |
| Other comonomers | 0 | 0 | 0 | 0 | EN[1)] 5 | 0 | 0 | 0 | 0 | 0 | 0 |
| Amount of residual monomers (wt.%) | 0.43 | 0.86 | 1.21 | 0.84 | 0.74 | 1.26 | 1.82 | 1.64 | 1.90 | 2.38 | 6.20 |

(Note) A: Benzoic anhydride B: Sulfobenzoic anhydride
C: Trifluoro acetic anhydride
1): Ethylidenenorbornene

Table 3 shows that the molded articles produced by adding carboxylic acid anhydrides contain less residual monomers than the molded articles produced in the absence of carboxylic acid anhydride.

Example 21 and Comparative Example 6

Molded articles were prepared in the same manner as Example 12 but substituting the mixture containing 95 wt.% of DCP and 5 wt.% of 5-ethylidenenorbornene for DCP.

The molded articles produced in the presence of benzoic anhydride contained 0.31 wt.% of residual monomers. On the other hand, the molded articles produced in the absence of benzoic anhydride contained 1.65 wt.% of residual monomers.

Examples 22-31 and Comparative Examples 7-8

DCP having the same purity as Examples 1-10 was used.

There was used diphenyldichlorosilane, phenyltrichlorosilane, methyltrichlorosilane, dimethyldichlorosilane or trimethylchlorosilane, each of which has a purity of above 99% determined by gas chromatography.

With 10 ml of the same catalyst solution as used in Examples 1-10 were mixed 1.0 ml acetylacetone and 500 ml of one of the monomer solutions containing DCP, DCP/ethylidenenorbornene or DCP/methyldicyclopentadiene with or without one of diphenyldichlorosilane, phenyltrichlorosilane, methyltrichlorosilane, dimethyldichlorosilane and trimethylchlorosilane in the amounts shown in Table 4 below to prepare the first reactive solution (Solution A) containing 0.001 M tungsten in terms of the metal content.

The activator-containing solution (Solution B) was prepared in the same manner as in Examples 1-10 but using the monomer solutions shown in Table 4 below.

Tough, brown plates were prepared by using the above Solutions A and B according to the same procedures as Examples 1-10.

In Example 31 and Comparative Example 7, there was used Solution A having less polymerizability as in Example 10.

The amount of the unreacted monomers was determined in the same manner as Examples 1-10.

The results are shown in Table 4 below.

Table 4

| | Example No. | | | | | | | | | | Comparative Example No. | |
|---|---|---|---|---|---|---|---|---|---|---|---|---|
| | 22 | 23 | 24 | 25 | 26 | 27 | 28 | 29 | 30 | 31 | 7 | 8 |
| Kind of halogenated silicon compound | A | A | B | C | D | E | A | E | B | A | - | - |
| Equivalent of halogenated silicon atom per 1 equivalent atom of tungsten | 0.5 | 1.0 | 1.0 | 0.5 | 1.0 | 2.0 | 1.0 | 1.0 | 1.5 | 1.0 | - | - |
| Monomer composition of Solutions A and B (mole %) | | | | | | | | | | | | |
| DCP | 100 | 100 | 100 | 100 | 100 | 100 | 95 | 95 | 95 | 100 | 100 | 100 |
| Other comonomers | 0 | 0 | 0 | 0 | 0 | 0 | EN 1) 5 | MDC 2) 5 | MDC 5 | 0 | 0 | 0 |
| Amount of residual monomers (wt.%) | 1.72 | 1.34 | 1.63 | 1.59 | 1.57 | 1.64 | 1.28 | 1.53 | 1.56 | 1.94 | 2.55 | 6.20 |

(Note)
A: Diphenyldichlorosilane
B: Phenyltrichlorosilane
C: Methyltrichlorosilane
D: Dimethyldichlorosilane
E: Trimethylchlorosilane
1): Ethylidenenorbornene
2): Methyldicyclopentadiene

Table 4 shows that the molded articles produced by adding said organic halogenated silicon compound contain less residual monomers than the molded articles produced in the absence of said silicon compound.

Example 32 and Comparative Example 9

Molded articles were prepared by using each of 50 ml of the same Solutions A and B as used in Example 23 but containing 6% of Stereon 720 rubber according to the same procedures as Example 11.

The amount of the residual monomers was determined in the same manner as Examples 1-10. The glass transition temperature and notched Izod strength of the molded articles were also measured.

The results are shown in Table 5 below.

Table 5

| Example No. | Example 32 | Compara. Example 9 |
|---|---|---|
| Amount of residual monomers (wt.%) | 2.4 | 4.5 |
| Tg (°C) | 132 | 126 |
| Notched Izod strength | 42 | 43 |

Table 5 shows that the addition of diphenyldichlorosilane decreases dramatically the amount of unreacted monomers in the molded artilces and provides the molded article with increased glass transition temperature (Tg) though the addition of said silane does not influence on notched Izod strength of the molded articles.

Examples 33-41 and Comparative Examples 10-11

DCP having the same purity as Examples 1-10 was used.

There was used phenyl dichlorophosphine, phenyl phosphonic dichloride or phosphoryl chloride, each of which has a purity of above 99%.

With 10 ml of the same catalyst solution as used in Examples 1-10 were mixed 1.0 ml acetylacetone and 500 ml of one of the monomer solutions containing DCP, DCP/ethylidenenorbornene or DCP/methyldicyclopentadiene with or without one of phenyl dichlorophosphine, phenyl phosphonic dichloride and phosphorus oxychloride in the amounts shown in Table 6 below to prepare the first rective solution (Solution A) containing 0.001 M tungsten in terms of the methyl content.

The activator-containing solution (Solution B) was prepared in the same manner as in Examples 1-10 but using the monomer solutions shown in Table 6 below and using a mixed activator containing triocylaluminum, dioctylalminum and diglyme in the molar ratio of 85:15:100 as the activator.

Tough, brown plates were prepared by using the above Solutions A and B according to the same procedures as Examples 1-10.

In Example 46 and Comparative Example 10, there was used Solution A having less polymerizability as in Example 10.

The amount of the unreacted monomers was determined in the same manner as Examples 1-10.

The results are shown in Table 6 below.

Table 6

| | Example No. | | | | | | | | | Comparative Example No. | |
|---|---|---|---|---|---|---|---|---|---|---|---|
| | 33 | 34 | 35 | 36 | 37 | 38 | 39 | 40 | 41 | 10 | 11 |
| Kind of halogenated phosphorus compound | A | A | B | B | C | C | A | C | C | - | - |
| Equivalent of halogenated phosphorus atom per 1 equivalent atom of tungsten | 1.0 | 2.0 | 0.5 | 1.0 | 0.5 | 1.0 | 2.0 | 1.0 | 1.0 | - | - |
| Monomer composition of Solutions A and B (mole %) | | | | | | | | | | | |
| DCP | 100 | 100 | 100 | 100 | 100 | 100 | 95 | 95 | 100 | 100 | 100 |
| Other comonomers | 0 | 0 | 0 | 0 | 0 | 0 | EN[1)] 5 | MDC[2)] 5 | 0 | 0 | 0 |
| Amount of residual monomers (wt.%) | 0.81 | 0.60 | 1.21 | 1.06 | 1.33 | 0.68 | 0.62 | 0.65 | 2.01 | 2.55 | 6.15 |

(Note) A: Phenyldichlorophosphine B: Phenylphosphoric dichloride
C: Phosphorus oxychloride
1): Ethylidenenorbornene
2): Methyldicyclopentadiene

Table 6 shows that the molded articles produced by adding said halogenated phosphorus compounds contain less unreacted monomers than the molded articles produced in the absence of said phosphorus compound.

Example 42 and Comparative Example 12

There were produced molded articles by using each of 50 ml of the same Solutions A and B as used in Example 38 but containing 6% of steron 720 rubber according to the same precedures as Example 11.

The amount of the unreacted monomers was determined in the same manner as Examples 1-10. The glass transition temperature and notched Izod strength of the molded articles were also determined.

The results are shown in Table 7 below.

Table 7

| Example No. | Example 42 | Compara. Example 12 |
|---|---|---|
| Amount of residual monomers (wt.%) | 2.4 | 4.5 |
| Tg (°C) | 132 | 126 |
| Notched Izod strength | 42 | 43 |

Table 7 shows that the addition of phosphorus oxychloride decreases dramatically the amount of unreacted monomers in the molded articles and provides the molded article with increased glass transition temperature (Tg) though the addition of phosphorus oxychloride does not influence on notched Izod strength of the molded article.

Examples 43-51 and Comparative Examples 13-14

DCP having the same purity as Examples 1-10 was used.

There was used benzene sulfonyl chloride, p-toluenesulfonyl chloride or thionyl chloride, each of which has a purity of above 99%.

With 10 ml of the same catalyst solution as used in Examples 1-10 were mixed 1.0 ml acetylacetone and 500 ml of one of the monomer solutions containing DCP, DCP/ethylidenenorbornene or DCP/methyldicyclopentadiene with or without one of said halogenated sulfur compounds in the amounts shown in Table 8 below to prepare the first reactive solution (Solution A) containing 0.001 M tungsten in terms of the metal content.

The activator-containing solution (Solution B) was prepared in the same manner as in Examples 33-41 but using the monomer solutions shown in Table 8 below.

Tough, brown plates were prepared by using the above Solutions A and B according to the same procedures as Examples 1-10.

In Example 51 and Comparative Example 14, there was used Solution A having less polymerizability as in Example 10.

The amount of the unreacted monomers was determined in the same manner as Examples 1-10.

The results are shown in Table 8 below.

Table 8

| | Example No. | | | | | | | | | Comparative Example No. | |
|---|---|---|---|---|---|---|---|---|---|---|---|
| | 43 | 44 | 45 | 46 | 47 | 48 | 49 | 50 | 51 | 13 | 14 |
| Kind of halogenated sulfur compound | A | A | B | B | C | C | A | B | A | - | - |
| Equivalent of halogenated sulfur atom per 1 equivalent atom of tungsten | 1.0 | 2.0 | 0.5 | 2.0 | 0.5 | 1.0 | 2.0 | 1.0 | 1.0 | - | - |
| Monomer composition of Solutions A and B (mole %) | | | | | | | | | | | |
| DCP | 100 | 100 | 100 | 100 | 100 | 100 | 95 | 95 | 100 | 100 | 100 |
| Other comonomers | 0 | 0 | 0 | 0 | 0 | 0 | EN1) 5 | MDC2) 5 | 0 | 0 | 0 |
| Amount of residual monomers (wt.%) | 0.37 | 0.09 | 1.12 | 0.75 | 1.52 | 1.29 | 0.12 | 1.44 | 0.75 | 2.55 | 6.15 |

(Note) A: Benzenesulfonyl chloride B: p-Toluenesulfonyl chloride
C: Thionyl chloride
1): Ethylidenenorbornene
2): Methyldicyclopentadiene

Table 8 shows that the molded articles produced in the presence of said halogenated sulfur compounds contain less residual monomers than the molded articles produced in the absence of said phosphorus compound.

Example 52 and Comparative Example 15

There were produced molded articles by using each of 50 ml of the same Solutions A and B as used in Example 43 but containing 6% of Stereon 720 rubber according to the same procedures as Example 11.

The amount of the unreacted monomers was determined in the same nammer as Examples 1-10. The glass transition temperature and notched Izod strength of the molded articles were also determined.

The results are shown in Table 9 below.

Table 9

| Example No. | Example 52 | Compar. Example 15 |
|---|---|---|
| Amount of residual monomers (wt.%) | 0.18 | 2.5 |
| Tg (°C) | 132 | 126 |
| Notched Izod strength | 42 | 43 |

Table 9 shows that the addition of benzenesulfonyl chloride decreases dramatically the amount of unreacted monomers in the molded articles and provides the molded article with increased glass transition temperature (Tg) though the addition of benzene sulfonic chloride does not influence on notched Izod strength of the molded article.

## Claims

1. A process for producing a cross-linked polymer, which comprises polymerizing at least one of metathesis polymerizable monomers in the presence of a metathesis polymerization catalyst system and at least one of (a) carboxylic acid halides, (b) carboxylic acid anhydrides, (c) organic halogenated silicon compounds having at least one halogen-silicon bond, (d) halogenated phosphorus compounds having at least one halogen-phosphorus bond and (e) halogenated sulfur compounds having at least one halogen-sulfur bond.

2. A process of claim 1 in which the metathesis polymerization catalyst system comprises a catalyst component containing at least one of transition metals and an activator component.

3. A process of claim 2 in which at least one of the compounds (a), (b), (c), (d) and (e) are used in the amount of 0.3-4 equivalent of carboxylic acid halides, carboxylic acid anhydrides, halogenated silicon atom of said (c), halogenated phosphorus atom of said (d) or halogenated sulfur atom of (e) per 1 equivalent atom of the transition metal in the catalyst component.

4. A process of claim 1, 2 or 3 in which the compounds (a) are aliphatic carboxylic acid chlorides, aromatic carboxylic acid chlorides or their mixture, the compounds (b) are aliphatic carboxylic acid anhydrides, aromatic acid anhydrides or their mixture, the compounds (c) are organic halogenated silanes, organic halogenated siloxanes or their mixture, the compounds (d) are halogenated phosphorus compounds having the formula

$P(R)a(X)b$ or $PO(R)a'(X)b'$

wherein R is an organic group, X is a halogen atom, a is an integer of 0-3, b is an integer of 1-5, the sum of a and b is 3 or 5, a' is an integer of 0-2, b' is an integer of 1-3, and the sum of a' and b' is 3, halogen-containing esters of said halogenated phosphorus compounds, partially-hydrolyzed and condensed halogen-containing products of said halogenated compounds or their mixture and the compounds (e) are halides of sulfur-containing oxyacids, sulfur halides, halides of mercaptans or their mixture.

5. A process of claim 1 or claims 2 to 4 in which the compounds (a), (b), (c), (d) and (e) have a boiling point of at least 60°C and are soluble in the metathesis polymerizable monomers.

6. A process of claim 1 or claims 2 to 5 in which the metathesis polymerizable monomers comprise dicyclopentadiene or a mixture of dicyclopentadiene and at least one of other monomers.

7. A cross-linked polymer produced by the process of claim 1, or claims 2 to 6.

8. A process for producing a molded article by introducing a reactive liquid mixture into a mold in which said liquid mixture is metathesis polymerized in bulk to produce the molded article, said liquid mixture comprising at least one of metathesis polymerizable monomers, a metathesis polymerization catalyst system and at least one of (a) carboxylic acid halides, (b) carboxylic acid anhydride, (c) organic halogenated silicon compounds having at least one halogen-silicon bond, (d) halogenated phosphorus compounds having at least one halogen-phosphorus bond and (e) halogenated sulfur compounds having at least one halogen-sulfur bond.

9. A process of claim 8 in which the metathesis polymerization catalyst system comprises a catalyst component containing at least one of transition metals and an activator component.

10. A process of claim 9 in which at least one of the compounds (a), (b), (c), (d) and (e) are used in the amount of 0.3-4 equivalent of carboxylic acid halides, carboxylic acid anhydrides, halogenated silicon atom of said (c), halogenated phosphorus atom of said (d) or halogenated sulfur atom of (e) per 1 equivalent atom of the transition metal in the catalyst component.

11. A process of claim 8, 9 or 10 in which the compounds (a) are aliphatic carboxylic acid chlorides, aromatic carboxylic acid chlorides or their mixture, the compounds (b) are aliphatic carboxylic acid anhydrides, aromatic acid anhydrides or their mixture, the compounds (c) are organic halogenated silanes, organic halogenated siloxanes or their mixture, the compounds (d) are halogenated phosphorus compounds having the formula

P(R)a(X)b or PO(R)a′(X)b′

wherein R is an organic group, X is a halogen atom, a is an integer of 0-3, b is an integer of 1-5, the sum of a and b is 3 or 5, and a′ is an integer of 0-2, b′ is an integer of 1-3, and the sum of a′ and b′ is 3, halogen-containing esters of said halogenated phosphorus compounds, partially-hydrolyzed and condensed halogen-containing products of said halogenated compounds or their mixture and the compounds (e) are halides of sulfur-containing oxyacids, sulfur halides, halides of mercaptans or their mixture.

12. A process of claim 8 or claims 9 to 11 in which the compounds (a), (b), (c), (d) and (e) have a boiling point of at least 60°C and are soluble in the metathesis polymerizable monomers.

13. A process of claim 8 or claims 9 to 12 in which the metathesis polymerizable monomers comprise dicyclopentadiene or a mixture of dicyclopentadiene and at least one of other monomers.

14. A molded article produced by the process of claim 8 or claims 9 to 13.

15. A multi-part polymerizable composition which comprises at least one of metathesis polymerizable monomers, a metathesis polymerization catalyst system and at least one of (a) carboxylic acid halides, (b) carboxylic acid anhydridies, (c) organic halogenated silicon compounds having at least one halogen-silicon bond, (d) halogenated phosphorus compounds having at least one halogen-phosphorus bond and (e) halogenated sulfur compounds having at least one halogen-sulfur bond, and said metathesis polymerization catalyst system comprising a catalyst component and an activator component which are not present in the same parts.

16. A composition of claim 15 in which the catalyst component contains at least one of transition metals.

17. A composition of claim 16 in which at least one of the compounds (a), (b), (c), (d) and (e) are used in the amount of 0.3-4. equivalent of carboxylic acid halides, carboxylic acid anhydrides, halogenated silicon atom of said (c), halogenated phosphorus atom of said (d) or halogenated sulfur atom of (e) per 1 equivalent atom of the transition metal in the catalyst component.

18. A composition of claim 15, 16 or 17 in which the compounds (a) are aiiphatic carboxylic acid chlorides, aromatic carboxylic acid chlorides or their mixture, the compounds (b) are aliphatic carboxylic acid anhydrides, aromatic acid anhydrides or their mixture, the compounds (c) are organic halogenated silanes, organic halogenated siloxanes or their mixture, the compounds (d) are halogenated phosphorus compounds having the formula

P(R)a(X)b or PO(R)a′(X)b′

wherein R is an organic group, X is a halogen atom, a is an integer of 0-3, b is an integer of 1-5, the sum of a and b is 3 or 5, and a′ is an integer of 0-2, b′ is an integer of 1-3, and the sum of a′ and b′ is 3, halogen-containing esters of said halogenated phosphorus compounds, partially-hydrolyzed and condensed halogen-containing products of said halogenated compounds or their mixture and the compounds (e) are halides of sulfur-containing oxyacids, sulfur halides, halides of mercaptans or their mixture.

19. A composition of claim 15 or claims 16 to 18 in which the compounds (a), (b), (c), (d) and (e) have a boiling point of at least 60°C and are soluble in the metathesis polymerizable monomers.

20. A composition of claim 15 or claims 16 to 19 in which the metathesis polymerizable monomers comprise dicyclopentadiene or a mixture of dicyclopentadiene and at least one of other monomers.

21. Use of the compositions of claims 15 to 20 for the preparation of molded articles.

22. A process of claims 1 to 13 for the preparation of molded articles.